# EUROPÄISCHE PATENTSCHRIFT

(11) **EP 1 824 900 B1**
(45) Veröffentlichungstag und Bekanntmachung des Hinweises auf die Patenterteilung: **08.07.2009**
(21) Anmeldenummer: 05818371.6
(22) Anmeldetag: 09.12.2005
(51) Int. Cl.: C08G 64/34, C08G 64/02

(54) **HERSTELLUNG UND VERWENDUNG VON ULTRAHOCHMOLEKULAREN POLYCARBONATEN**
PRODUCTION AND USE OF ULTRA-HIGH MOLECULAR WEIGHT POLYCARBONATES
PROCEDE POUR PRODUIRE ET UTILISER DES POLYCARBONATES A HAUT POIDS MOLECULAIRE

(30) Priorität: 10.12.2004 DE 102004059615
(43) Veröffentlichungstag der Anmeldung: 29.08.2007
(73) Patentinhaber: BASF SE, 67056 Ludwigshafen (DE)
(72) Erfinder: LUINSTRA, Gerrit, 68161 Mannheim (DE)
(74) Vertreter: Hörschler, Wolfram Johannes
(86) Internationale Anmeldenummer: PCT/EP2005/013228
(87) Internationale Veröffentlichungsnummer: WO 2006/061237

(56) Entgegenhaltungen:
- WO-A-03/029325
- US-B1- 6 211 286

## Beschreibung

Die vorliegende Erfindung betrifft ein Verfahren zur Herstellung von hochmolekularen Polycarbonaten, sowie die Verwendung dieser Polycarbonate für die Herstellung von Griffen, Tasten, Tastaturen und ähnlichen Gebrauchsgegenständen.

Weiche Kunststoffe, die heutzutage eingesetzt werden in Anwendungen wie Spielzeug, als Schalter, Tastaturen oder Griffe, in Körperschutz-Sportartikeln, in der Medizintechnik, als Textilfasern oder als weiche Verschlüsse von Trinkflaschen bestehen im Allgemeinen aus einem (amorphen) polymeren Werkstoff, dessen Glastemperatur durch die Zugabe eines Weichmachers und/oder weiterer Komponenten so abgesenkt wird, dass eine weiche, flexible Oberfläche entsteht. Dieses Erscheinungsbild der Oberfläche ist von essentieller Bedeutung für die genannten Anwendungen.

Die großtechnisch zur Verfügung stehenden Kunststoffe wie beispielsweise Polyolefine (Polyethylen und Polypropylen), Polystyrol und Styrolcopolymere, Polyamide (polyamid-6 und Polyamid-6,6), Polyester (Polyethylenterephthalat und Polybutylenterephthalat), Polyvinylchlorid, aromatische Polycarbonate u.a. besitzen keine Glasübergangstemperatur im Bereich unterhalb 60 °C oder sind semikristallin und deswegen nicht weich, flexibel und/oder transparent. Dieser Umstand macht sie für eine Anwendung beispielsweise als gegebenenfalls durchsichtige Tastaturen, Schalter oder Griffe, in Spielzeug, in Zahnbürsten oder für transparente Umhüllungen von Schreibgeräten, Haushaltsgeräten, Sportgeräten oder im Automobilbereich als Werkstoff nicht besonders geeignet.

Ein Beispiel für einen geeigneten polymeren Werkstoff ist weiches Polyvinylchlorid. Dieses Polymer hat eine Glasübergangstemperatur von 80 bis 100 °C, jedoch wird durch die Zugabe von insbesondere Phthalaten ein Material erhalten, welches sich bei Raumtemperatur verbiegen lässt ohne zu brechen, flexibel ist und eine gewisse Rückstellkraft wie Gummi oder Kautschuk aufweist.

Nachteilig an einem Verfahren, in dem einem Polymer Zusatzstoffe hinzugefügt werden müssen, ist, dass es aufwendig und mit erhöhten Kosten verbunden ist. Darüber hinaus ist es bei der Verwendung von derartigen weich gemachten Kunststoffen in Bereichen, in denen es zu direktem oder indirektem Kontakt mit Lebewesen, Tieren, Menschen, Pflanzen oder Bakterien, kommen kann, nachteilig, dass ein Ausschwitzen der Weichmacher-Komponenten auftreten kann, welches dazu führt, dass das Material seine vorteilhaften Eigenschaften verliert oder dass durch die Freisetzung von gesundheitsschädlichen Verbindungen ein unangenehmer und/oder gesundheitsschädlicher Geruch entsteht. Ein weiterer erheblicher Nachteil ist, dass durch die Diffusion der niedermolekularen Zusatzstoffe an die Oberfläche eine klebrige Haptik entstehen kann. Eine derartige klebrige Haptik ist besonders nachteilig in Produkten wie Spielzeug, Schaltern, Tastaturen, Griffen, Schutzvorkehrungen wie beispielsweise einem Tischkantenschutz, (Lebensmittel-)Verpackungen, Sportgeräten, Haushaltsgeräten, Anwendungen im Automobil-Innenbereich usw., da eine derartige klebrige Haptik eine Unattraktivität der Produkte zur Folge hat.

Für Griffe, Tasten, Schalter, Halterungen usw. kann es darüber hinaus neben dem Vorhandensein einer angenehmen Haptik vorteilhaft sein, eine individuelle, auf die benutzende Einzelperson oder die entsprechende Anwendung maßgeschneiderte Form aufzuweisen. Dies ist zum Beispiel der Fall bei Sportgeräten, beispielsweise Tennisschläger, Badmintonschläger, Squashschläger usw., Werkzeugen, beispielsweise Hammer, Sägen, Stichsägen, gegebenenfalls elektroangetriebene Haushaltsgeräte, beispielsweise Messer, Mixer, Stabmixer, Schneebesen, Kneter, Töpfe, Löffel, Schneidebretter, Hygieneutensilien, beispielsweise Zahnbürste, Klobürste, Haarfön, Automobilinnenraumapplikationen, beispielsweise Lenkrad, Schalthebel, Seitenwände, Sitze, in Textilien als Faser oder in der Medizintechnik, beispielsweise als körperidentische Abdrücke oder Hautersatz usw. Diese Liste ist nicht abschließend und kann durch den Fachmann beliebig erweitert werden.

Es bestand daher die Aufgabe, ein Polymer bereit zu stellen, das bei Gebrauchstemperatur, im Allgemeinen Raumtemperatur, eine weiche und flexible Haptik aufweist, jedoch nicht klebrig ist und sich gegebenenfalls bei Temperaturen, die normalerweise im Haushaltsbereich erreicht werden können, beispielsweise mit heißem Wasser oder mit einem Haarfön, reversibel in eine individuelle Form bringen lässt. Des Weiteren ist es notwendig, dass das Polymer kein oder kaum Wasser aufnimmt.

Diese Aufgabe kann gelöst werden durch ein aliphatisches Polycarbonat mit einem gewichtsmittleren Molekulargewicht M_{w} von ≥ 230.000 g/mol und einem Gehalt an cyclischen Verbindungen von ≤ 2 Gew.-%.

Ähnliche aliphatische Polycarbonate sind bereits aus dem Stand der Technik bekannt.

US 5,026,676 offenbart Zinkcarboxylate hergestellt aus Zinkoxid und Glutar- oder Adipinsäure als Katalysatoren in der Copolymerisation von Kohlendioxid mit Oxiranen. Es werden Polycarbonate mit gewichtsmittleren Molekulargewichten von ≤ 167.000 g/mol und einem Anteil an cyclischen Nebenprodukten von 3 bis 5% erhalten.

US 4,943,677 betrifft ein Verfahren zur Herstellung von Polycarbonaten durch Copolymerisation von Kohlendioxid und Oxiranen. Die Polycarbonate beinhalten 3 bis 5% cyclische Verbindungen. In dem Verfahren wird eine sterisch gehinderte Protonenquelle eingesetzt, um das gewichtsmittlere Molekulargewicht der hergestellten Polycarbonate zu begrenzen.

US 3,585,168 offenbart die Verwendung von Metall-Alkyl-Verbindungen, beispielsweise Diethylzink, als Katalysatoren bei der Herstellung von Polycarbonaten aus Kohlendioxid und Oxiranen mit Molekulargewichten von 10.000 bis 200.000 g/mol.

In I. Hattori, Polymer Journal, Vol. 13, Nr. 4, Seiten 407 bis 410 (1981) wird ein Verfahren zur Herstellung von Polycarbonaten aus Propylenoxid und Kohlendioxid offenbart, in dem Reaktionsprodukte von Zinkhydroxid und aliphatischen Dicarbonsäuren als Katalysatoren eingesetzt werden. Die erzielten gewichtsmittleren Molekulargewichte betragen bis zu 210.000 g/mol.

Aliphatische Polycarbonate aus Oxiranen und Kohlendioxid sind für die hier angestrebte Verwendung besonders geeignet, da sie ohne den Zusatz von Weichmachern eine weiche, flexible Haptik zeigen.

Die genannten Dokumente offenbaren jedoch Verfahren zur Herstellung von aliphatischen Polycarbonaten aus Oxiranen und Kohlendioxid, die für die genannte Verwendung ungeeignet sind, da sie zu geringe Molekulargewichte aufweisen, Wasser aufnehmen oder größere Anteile von cyclischen Verunreinigungen von 3 bis 5% enthalten. Diese cyclischen Verunreinigungen wirken als Weichmacher für die aliphatischen Polycarbonate und können zu einer klebrigen Oberfläche führen.

Durch die klebrige Oberfläche kommt es beispielsweise auch leicht zu Verklebungen, wenn Gegenstände aus dem genannten Material aufeinander gedrückt werden, die beim Lösen zur Beschädigung oder sogar zur Zerstörung der Oberfläche führen. Die genannten Nachteile der aliphatischen Polycarbonate offenbart durch die genannten Dokumente des Standes der Technik können vermieden werden, wenn Polycarbonate, hergestellt durch das erfindungsgemäße Verfahren, eingesetzt werden.

Die erfindungsgemäße Aufgabe wird gelöst durch ein Verfahren zur Herstellung von Polycarbonaten mit einem gewichtsmittleren Molekulargewicht M_{w} von ≥ 230.000 g/mol und einem Gehalt an cyclischen Verbindungen von ≤ 2 Gew.-%, beinhaltend die Schritte
(a) Umsetzung von wenigstens einem Oxiran mit Kohlendioxid in Gegenwart einer Metall-Polycarbonsäure-Verbindung in einem aprotischen, nicht mit Wasser mischbaren Lösungsmittel bei einer Temperatur von 40 bis 120 °C und einem Druck von 1 bis 100 bar, wobei das molare Verhältnis von Monomer zu Metall-Polycarbonsäure-Verbindung ≥ 75 beträgt,
(b) Zugabe einer wässrigen Lösung einer anorganischen Säure zu dem Reaktionsgemisch nach Beendigung der Umsetzung,
(c) Abtrennung der wässrigen Phase,
(d) gegebenenfalls Waschen der verbleibenden organischen Phase mit Wasser und
(e) Entgasen und Trocknen der resultierenden Aufschlämmung des Polycarbonats in dem aprotischen, nicht mit Wasser mischbaren Lösungsmittel.

Es wurde gefunden, dass ein molares Verhältnis von Monomer zu Metall-Polycarbonsäure-Verbindung von ≥ 75, bevorzugt von ≥ 85, besonders bevorzugt von ≥ 90 in dem erfindungsgemäßen Verfahren zur Herstellung von Polycarbonaten besonders hohe gewichtsmittlere Molekulargewichte von ≥ 230.000 g/mol ergibt.

In dem erfindungsgemäßen Verfahren wird wenigstens ein Oxiran mit Kohlendioxid umgesetzt. Das einsetzbare Oxiran entspricht der allgemeinen Formel (I) 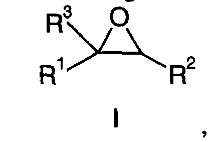 wobei R¹, R² und R³ unabhängig von einander Wasserstoff oder substituierter oder unsubstituierter, aliphatischer Kohlenwasserstoffrest mit 1 bis 12 Kohlenstoffatomen, substituierter oder unsubstituierter, aromatischer Kohlenwasserstoffrest mit 6 bis 18 Kohlenstoffatomen, substituierter oder unsubstituierter, alkylaromatischer Kohlenwasserstoffrest mit 7 bis 18 Kohlenstoffatomen oder substituierter oder unsubstituierter, araliphatischer Kohlenwasserstoffrest mit 7 bis 18 Kohlenstoffatomen bedeuten. Gegebenenfalls vorhandene Substituenten der aliphatischen, aromatischen, alkylaromatischen oder araliphatischen Reste sind ausgewählt aus der Gruppe der Halogene, beispielsweise Fluor, Chlor, Brom oder Iod, funktionelle Gruppen, beispielsweise Nitril-, Ether-, Carboxyl-, Amin-, Amid, Imin-, Imid-Gruppe und gegebenenfalls weiteren aromatischen Resten mit 6 bis 18 Kohlenstoffatomen.

In einer weiteren Ausführungsform des erfindungsemäßen Verfahrens ist R³ Wasserstoff und R¹ und R² bilden mit den zwei Kohlenstoffatomen der Oxiran-Funktionalität einen 4-bis 10-gliedrigen, bevorzugt einen 5- bis 8-gliedrigen, carbocyclischen Ring, der gegebenenfalls mit den oben genannten Substituenten substituiert sein kann. Bevorzugt ist R³ Wasserstoff und R¹ und R² bilden einen carbocyclischen 6-gliedrigen Ring, der nicht substituiert ist.

In einer weiteren bevorzugten Ausführungsform ist R² Wasserstoff und R¹ und R³ unabhängig voneinander ausgewählt aus Wasserstoff oder gegebenenfalls mit wenigstens einem Halogen substituiertem Methyl, Ethyl, Propyl, Butyl, Pentyl, Hexyl oder gegebenenfalls mit Halogenen substituiertem Phenyl oder Benzyl.

In einer weiteren bevorzugten Ausführungsform ist R² Methyl und R¹ und R³ unabhängig voneinander ausgewählt aus gegebenenfalls mit Halogenen substituiertem Methyl, Ethyl, Propyl, Butyl, Pentyl, Hexyl oder gegebenenfalls mit Halogenen substituiertem Phenyl oder Benzyl.

In einer weiteren bevorzugten Ausführungsform ist R¹ Ethyl und R² und R³ unabhängig voneinander ausgewählt aus gegebenenfalls mit Halogenen substituiertem Methyl, Ethyl, Propyl, Butyl, Pentyl, Hexyl oder gegebenenfalls mit Halogenen substituiertem Phenyl oder Benzyl.

Besonders bevorzugt wird in das erfindungsgemäße Verfahren ein Oxiran eingesetzt, ausgewählt aus der Gruppe bestehend aus Ethylenoxid, Propylenoxid, n-Butylenoxid, Isobutylenoxid, Pentylenoxid, Hexylenoxid, Epichlorhydrin, Styroloxid, Cyclohexenoxid und Gemischen davon, besonders bevorzugt ausgewählt aus Ethylenoxid, Propylenoxid, Isobutylenoxid, Cyclohexenoxid und Gemischen davon.

In das erfindungsgemäße Verfahren kann sowohl ein einheitliches Oxiran eingesetzt werden, es kann allerdings auch ein Gemisch von 2 oder mehr der genannten Oxirane eingesetzt werden. In einer bevorzugten Ausführungsform wird ein Gemisch von Ethylenoxid und Propylenoxid eingesetzt.

Geeignete Verfahren zur Herstellung, beispielsweise durch Oxidation der entsprechenden Olefine, bzw. Reinigung, beispielsweise durch Destillation, dieser Oxirane sind dem Fachmann bekannt.

Das in das erfindungsgemäße Verfahren einsetzbare Kohlendioxid kann ebenfalls durch dem Fachmann bekannte Verfahren hergestellt, isoliert und/oder gereinigt werden.

Das erfindungsgemäße Verfahren wird in Gegenwart einer Metall-Polycarbonsäure-Verbindung durchgeführt. Bevorzugt ist dabei die Metall-Polycarbonsäure-Verbindung eine Metall-Dicarbonsäure-Verbindung.

Geeignete Metalle sind Metalle der Alkali- oder Erdalkalimetallgruppe, sowie der Gruppen 3, 4, 5, 6, 7, 8, 9, 10, 11 und 12, sowie die Metalle der Gruppen 13, 14 und 15 des Periodensystems der Elemente (neue Nummerierung gemäß IUPAC). Bevorzugt werden als Metalle Alkali-, Erdalkalimetalle und Metalle der Gruppen 11 und 12 des Periodensystems der Elemente eingesetzt. Es ist erfindungsgemäß möglich, dass ein einheitliches Metall eingesetzt wird, es ist aber auch möglich, dass Gemische von 2 oder mehr Metallen eingesetzt werden.

Die einsetzbare Dicarbonsäure entspricht der allgemeinen Formel (II)

HOOC(CH₂)ₓCOOH (II),

wobei x eine ganze Zahl von 0 bis 12, bevorzugt 1 bis 8, besonders bevorzugt 3 oder 4 bedeutet. In das erfindungsgemäße Verfahren können sowohl Metall-Dicarbonsäure-Verbindungen eingesetzt werden, die eine einheitliche Dicarbonsäure aufweisen, es können aber auch verschiedene Dicarbonsäuren in den Metall-Dicarbonsäure-Verbindungen vorliegen.

Bevorzugt wird in das erfindungsgemäße Verfahren eine Metall-Dicarbonsäure-Verbindung eingesetzt, in der ausschließlich eine Dicarbonsäure der genannten allgemeinen Formel (II) vorliegt.

Die in das erfindungsgemäße Verfahren einsetzbaren Metall-Dicarbonsäure-Verbindungen können nach dem Fachmann bekannten Verfahren hergestellt werden. Ein Verfahren zur Herstellung der Metall-Dicarbonsäure-Verbindung ist in I. Hattori, Polymer Journal, Vol. 13, Nr. 4, Seiten 407 bis 410 (1981) offenbart.

Als Metall wird besonders bevorzugt Zink eingesetzt. Als Dicarbonsäure wird bevorzugt Glutarsäure (x = 3), Adipinsäure (x = 4) oder eine Mischung von beiden eingesetzt. Ganz besonders bevorzugt wird in das erfindungsgemäße Verfahren als Metall-Dicarbonsäure-Verbindung Zink-Glutarat, Zink-Adipinat oder eine Zinkdicarboxylat-Mischung hergestellt aus Adipin- und Glutarsäure eingesetzt.

Das erfindungsgemäße Verfahren wird in einem aprotischen, nicht mit Wasser mischbaren Lösungsmittel durchgeführt. Bei diesem Lösungsmittel handelt es sich um ein organisches Lösungsmittel, beispielsweise cyclische Ether, Alkane, substituierte und unsubstituierte aromatische Verbindungen, bevorzugt unsubstituierte oder mit 1 bis 4 C₁- bis C₄-Alkylradikalen substituierte aromatische Verbindungen, besonders bevorzugt Benzol, Toluol, Ethylbenzol oder Isomere von Xylol. Das erfindungsgemäße Verfahren kann in einem einheitlichen Lösungsmittel durchgeführt werden, es können aber auch Gemische von 2 oder mehr der zuvor genannten Lösungsmittel eingesetzt werden.

Bevorzugt bildet das aprotische, nicht mit Wasser mischbare Lösungsmittel mit Wasser ein Azeotrop, d.h. ein Gemisch, das man nicht durch Destillation trennen kann, weil die Zusammensetzung in der Flüssigkeit und in der Gas-Phase gleich sind. (Die Gehalte in der Lösung entsprechen den Partialdrücken über der Lösung).

Im Rahmen dieser Erfindung bedeutet "nicht mit Wasser mischbar", dass sich von dem erfindungsgemäß einsetzbaren Lösungsmittel weniger als 4%, bevorzugt weniger als 3%, besonders bevorzugt weniger als 2% bei Raumtemperatur (20 °C) in Wasser lösen.

Das erfindungsgemäße Verfahren beinhaltet die folgenden Schritte:
(a) Umsetzung von wenigstens einem Oxiran mit Kohlendioxid in Gegenwart einer Metall-Polycarbonsäure-Verbindung in einem aprotischen, nicht mit Wasser mischbaren Lösungsmittel bei einer Temperatur von 40 bis 120 °C und einem Druck von 1 bis 100 bar, wobei das molare Verhältnis von Monomer zu Metall-Polycarbonsäure-Verbindung ≥ 75 beträgt,
(b) Zugabe einer wässrigen Lösung einer anorganischen Säure zu dem Reaktionsgemisch nach Beendigung der Umsetzung,
(c) Abtrennung der wässrigen Phase,
(d) gegebenenfalls Waschen der verbleibenden organischen Phase mit Wasser und
(e) Entgasen und Trocknen der resultierenden Aufschlämmung des Polycarbonats in dem aprotischen, nicht mit Wasser mischbaren Lösungsmittel.

### Zu Schritt (a):

Das molare Verhältnis von Monomer zu Metall-Polycarbonsäure-Verbindung beträgt ≥ 75, bevorzugt ≥ 85, besonders bevorzugt ≥ 90.

Das erfindungsgemäße Verfahren wird bei einer Temperatur von 40 bis 120 °C, bevorzugt von 40 bis 100 °C, besonders bevorzugt von 40 bis 90 °C durchgeführt. Der Reaktionsdruck des erfindungsgemäßen Verfahrens beträgt 1 bis 100 bar, bevorzugt 10 bis 80, besonders bevorzugt 20 bis 60 bar.

In einer bevorzugten Ausführungsform wird der Verfahrensdruck bei der Herstellung des Polycarbonats durch das Kohlendioxid-Gas erzeugt. Es ist des Weiteren auch möglich, dass weitere Gase, beispielsweise Stickstoff und/oder Edelgase, dem Kohlendioxidgas zugesetzt werden. Die Reaktionsführung kann stufenweise oder kontinuierlich durchgeführt werden. Bevorzugt wird der Katalysator im Reaktor in dem entsprechenden aprotischen, nicht mit Wasser mischbaren Lösungsmittel vorgelegt, das Oxiran zudosiert und die Temperatur auf die gewünschte Reaktionstemperatur gebracht, während der Druck auf den vorgesehenen Wert mit Kohlendioxid-Gas bzw. Gemischen von Kohlendioxid-Gas und anderen Gasen eingestellt wird. Es ist auch möglich, einen Teil eines Oxirans vorzulegen und ein anderes oder das gleiche Oxiran bei Reaktionsdruck und/oder Reaktionstemperatur hinzuzufügen.

### Zu Schritt (b):

Nach Beendigung der Reaktion wird der Reaktionsdruck auf Normaldruck abgesenkt. Dann wird der Reaktionsmischung eine wässrige Lösung einer anorganischen Säure ausgewählt aus der Gruppe bestehend aus Salzsäure, Schwefelsäure, Phosphorsäure, Methansulfonsäure und Gemischen davon, bevorzugt Salzsäure, zugegeben. Die einsetzbaren Säuren sind nicht sterisch gehindert. Die Konzentration der anorganischen Säure in Wasser beträgt 0,001 bis 20 M, bevorzugt 0,001 bis 10 M, besonders bevorzugt 0,05 bis 5 M. Die Zugabe der wässrigen Lösung der anorganischen Säure erfolgt unter stetiger Durchmischung des Reaktionsgemischs. Eine gute Durchmischung kann durch die Verwendung von beispielsweise einem Rührwerk, einer Pumpeinrichtung, (Ultra)-Turrax, einem statischen Mischer und derartigen dem Fachmann bekannten Einrichtungen erreicht werden. Bevorzugt wird ein statischer Mischer benutzt. In einer weiteren Ausführungsform wird mit einem MIG-Rührwerk gerührt. Vor Zugabe der wässrigen Lösung der anorganischen Säure kann die Reaktionsmischung mit einem geeigneten organischen Lösungsmittel verdünnt werden. Geeignete Lösungsmittel sind aliphatische oder aromatische, gegebenenfalls halogenhaltige Lösungsmittel, beispielsweise Tetrachlorkohlenstoff, Chloroform oder Methylenchlorid. Neben einem einzelnen Lösungsmittel kann auch ein Gemisch von zwei oder mehr Lösungsmitteln eingesetzt werden.

Durch den erfindungsgemäßen Schritt (b) werden Reste des eingesetzten Katalysators und weitere Nebenprodukte möglichst vollständig entfernt.

### Zu Schritt (c):

In diesem Schritt wird in der zweiphasigen Reaktionsmischung die wässrige Phase von der organischen Phase abgetrennt. Dies kann mit dem Fachmann bekannten Verfahren durchgeführt werden. Beispielhaft sind Dekantieren oder Ablassen der Phase mit der jeweils höheren Dichte durch eine Öffnung im unteren Bereich des Reaktors, jeweils nach möglichst vollständiger Phasentrennung, genannt.

Nach Abtrennen der wässrigen Phase liegt das hergestellte Polycarbonat in dem aprotischen, nicht mit Wasser mischbaren Lösungsmittel in Form einer Aufschlämmung vor. Diese Aufschlämmung hat einen Feststoffgehalt von 5 bis 75 Gew.-%, bevorzugt von 10 bis 50 Gew.-%, besonders bevorzugt von 15 bis 40 Gew.-%.

### Zu Schritt (d):

Nachdem die wässrige Phase, möglichst vollständig, abgetrennt worden ist, wird die verbliebene organische Phase gegebenenfalls mit Wasser gewaschen. Dazu wird 1 bis 7 mal, bevorzugt 1 bis 5 mal, besonders bevorzugt 1 bis 3 mal Wasser in einer Menge von 0,5 bis 2 mal, bevorzugt 0,7 bis 3 mal, besonders bevorzugt 0,9 bis 1,5 mal der Menge an organischer Phase zugegeben und vollständig durchmischt. Vor erneuter Zugabe einer Menge an Wasser wird die Menge an Wasser der vorherigen Zugabe nach möglichst vollständiger Phasentrennung abgetrennt. Methoden zur Durchmischung und zur Abtrennung der wässrigen Phase sind bei Schritt (b) und Schritt (c) beschrieben.

### Zu Schritt (e):

Die resultierende Aufschlämmung des Polycarbonats in dem aprotischen, nicht mit Wasser mischbaren Lösungsmittel wird nach dem Fachmann bekannten Methoden entgast und getrocknet. Dazu kann die Polymer enthaltende Phase beispielsweise mittels einer Pumpe auf einen Extruder transferiert werden. Die Entgasung wird bei einer Temperatur von 80 bis 300 °C, bevorzugt 120 bis 250 °C, besonders bevorzugt 150 bis 220 °C durchgeführt. Die Entgasungstemperatur liegt dabei bevorzugt oberhalb der Siedetemperatur des aprotischen, nicht mit Wasser mischbaren Lösungsmittels. Die Entgasung kann auch bei einem Druck unterhalb Atmosphärendruck, bevorzugt ≤ 800 mbar, besonders bevorzugt ≤ 500 mbar, besonders bevorzugt ≤ 200 mbar durchgeführt werden. Die Entgasung und Trocknung kann beispielsweise auf einem Extruder oder einem Entgasungstopf durchgeführt werden. Bevorzugt wird ein Extruder benutzt, um die Polycarbonat-Aufschlämmung zu entgasen. Dazu wird das Produktgemisch auf einen Doppelschneckenextruder gebracht. Das flüssige Polycarbonat kann nach Entgasung bzw. Trocknung in einem Luft- oder Wasserbad zu einem Strang von ungefähr 2 bis 10 mm, bevorzugt 4 bis 6 mm gegossen werden. Dieser wird in Partikel zerschnitten, deren Lange 0,2 bis 50 mm, bevorzugt 1 bis 30 mm, beträgt.

Das Polycarbonat, hergestellt durch das erfindungsgemäße Verfahren, weist ein gewichtsmittleres Molekulargewicht von ≥ 230.000 g/mol, bevorzugt ≥ 240.000 g/mol, besonders bevorzugt von ≥ 250.000 g/mol, ganz besonders bevorzugt von ≥ 300.000 g/mol auf.

Die Glasübergangstemperatur des durch das erfindungsgemäße Verfahren hergestellten Polycarbonats beträgt 10 bis 50 °C, bevorzugt 15 bis 45 °C, besonders bevorzugt 20 bis 40 °C.

Die Polydispersität des durch das erfindungsgemäße Verfahren hergestellten Polycarbonats beträgt 2,0 bis 12,0, bevorzugt 2,5 bis 10, besonders bevorzugt 3,0 bis 8,0.

Die Glastemperatur ist abhängig von den genauen Reaktionsparametern. Durch Variation in Druck und/oder Temperatur kann das Polymer neben Carbonatverknüpfung auch Ethereinheiten enthalten. Die Struktur des Produktes lässt sich mittels NMR aufklären und hat bevorzugt die folgende Struktur -[(1,2-H₂C₂RR')₁₊ₙ(OC(=O)O]- mit 0 < n < 5. Dieses statistische Polymer kann je nach Verwendung hinsichtlich der Glastemperatur maßgeschneidert werden.

In dem durch das erfindungsgemäße Verfahren herstellbaren Polycarbonat sind die Oxiran-Bausteine, bevorzugt Ethylenoxid- und Propylenoxid-Bausteine, zu 60 bis 97%, bevorzugt zu 85 bis 95%, besonders bevorzugt zu 90 bis 94% über eine Carbonatgruppe miteinander verbunden und zu 3 bis 40%, bevorzugt zu 5 bis 15%, besonders bevorzugt zu 6 bis 10% über eine Ethergruppe miteinander verbunden.

Das durch das erfindungsgemäße Verfahren herstellbare Polycarbonat weist einen besonders niedrigen Anteil an cyclischen Verbindungen auf. Bevorzugt liegt der Anteil an cyclischen Verbindungen bei ≤ 2 Gew.-%.

Eine weitere Möglichkeit, die Glastemperatur der Polycarbonate auf passende Werte einzustellen, ist es, Terpolymere zu synthetisieren ausgehend von Propylenoxid, Ethylenoxid und Kohlendioxid.

Das erfindungsgemäße Verfahren führt zu einem Polycarbonat mit einem gewichtsmittleren Molekulargewicht von ≥ 230.000 g/mol, bevorzugt ≥ 240.000 g/mol, besonders bevorzugt 250.00 g/mol, ganz besonders bevorzugt ≥ 300.000 g/mol, enthaltend Oxiran- und Kohlendioxid-Bausteine, wobei die Oxiran-Bausteine zu 60 bis 97%, bevorzugt zu 85 bis 95%, besonders bevorzugt zu 90 bis 94%, über eine Carbonatgruppe miteinander verbunden sind und zu 3 bis 40%, bevorzugt zu 5 bis 15%, besonders bevorzugt zu 6 bis 10%, über eine Ethergruppe miteinander verbunden sind und welches eine Glasübergangstemperatur von 10 bis 50 °C, bevorzugt von 15 bis 45 °C, besonders bevorzugt von 20 bis 40 °C, aufweist. Bevorzugt weist das Polycarbonat als Oxiran-Bausteine Ethylenoxid- und Propylenoxid-Bausteine auf.

Die vorliegende Erfindung betrifft auch die Verwendung eines Polycarbonats bei künstlerischen Anwendungen, beispielsweise als plastisches Verarbeitungsmaterial oder in der Medizintechnik, beispielsweise als körperidentische Abdrücke oder Hautersatz.

Die vorliegende Erfindung betrifft auch die Verwendung eines Polycarbonates bei der Herstellung, bevorzugt bei der Beschichtung von Handgriffen, von Sportgeräten wie Tennisschläger, Badmintonschläger, Squashschläger usw., von Haushaltsgeräten wie Mixer, Messer, Bügeleisen, Stabmixer, Schneebesen, Kneter, Töpfe, Löffel, Schneidebretter, von Werkzeugen wie Hammer, Sägen, Stichsägen, im Automobilbereich wie Lenkrad, Schalter, Seitenwände, Sitze, bei der Herstellung von Hygieneutensilien wie Zahnbürste, Klobürste, Haarfön, von Kommunikationsgeräten wie Mobiltelefone (Tasten und Griff), Telefon, von Schreibgeräten wie Kugelschreiber, Bleistifte, Füllfederhalter.

Im Rahmen der vorliegenden Erfindung wird unter "Handgriff" eine Fläche an einem Gegenstand verstanden, auf der wenigstens zwei Finger wenigstens einer menschlichen Hand dergestalt aufliegen können, dass der Gegenstand durch die wenigstens zwei Finger gehalten, gegriffen, bedient und/oder verwendet werden kann.

Das Polycarbonat in Granulatform kann mittels üblichen dem Fachmann bekannten Methoden in einen Gebrauchsgegenstand oder in eine oberflächliche Beschichtung verformt werden. Dazu eignen sich insbesondere die Methoden, die bei thermoplastischen Verformungsmassen eingesetzt werden, wie beispielsweise Spritzgießen, Blasformen, Pressen, Co-Extrudieren, Kneten oder Walzen. Das erfindungsgemäß herstellbare Polycarbonat wird bevorzugt zur, gegebenenfalls teilweisen, oberflächlichen Beschichtung von Handgriffen von Gegenständen verwendet.

Zur Herstellung von Griffen wird beispielsweise ein Spritzgussverfahren angewendet. Die Verarbeitung kann bei Temperaturen zwischen 150 und 230 °C, bevorzugt unterhalb von 200 °C durchgeführt werden. Bei Temperaturen über 200 °C entstehen unvorteilhafte Zersetzungsprodukte, die als Weichmacher fungieren oder zu einer klebrigen Oberfläche führen.

Es ist erfindungsgemäß möglich, dass der Gegenstand, bevorzugt der Handgriff, vollkommen aus dem erfindungsgemäß herstellbarem Polycarbonat besteht, oder dass ein Handgriff mit erfindungsgemäß herstellbaren Polycarbonat beschichtet ist. Die Dicke einer solchen Beschichtung beträgt 0,1 bis 30 mm, bevorzugt 0,5 bis 10 mm, besonders bevorzugt 1 bis 5 mm.

Das Polycarbonat kann beispielsweise in Form von einem Griff eines Werkzeugs, einer Zahnbürste, eines Schreibgeräts (Kugelschreiber) oder eines Tennisschlägers über einen festen Kern aufgebracht werden. Auf diese Art entsteht eine transparente Schicht über dem Kern. Der Kern besteht aus üblichen Materialien, beispielsweise Metall, Holz, Kunststoff, Keramik oder Materialien, die zwei oder mehr der genannten enthalten. Es besteht auch die Möglichkeit ein Muster, beispielsweise ein Farb- oder Reliefmuster, auf den Kern aufzubringen, um dadurch den Kern zu schützen oder ein Dekor aufzubringen. So kann zum Beispiel ein Zahnbürstenkern mit einem dekorativen Muster versehen werden und anschließend mit einer Schicht aus dem erfindungsgemäß herstellbaren Polycarbonat bedeckt werden, die eine besonders angenehme Haptik aufweist, weich ist und nicht klebt.

Ein weiterer Vorteil dieser Polycarbonatgriffe liegt in den thermischen Eigenschaften des Materials. Durch leichtes Erhitzen lässt sich das Material, beispielsweise der Handgriff, reversibel verformen ohne den Kern in seiner Form oder seinem Aussehen zu verändern.

Wenn beispielsweise ein erfindungsgemäßes Polycarbonat mit einer Glastemperatur von ca. 25 °C in einem Glas mit haushaltswarmem Wasser (45 bis 65 °C) erwärmt wird, lässt es sich durch einen Handdruck in eine individuelle Form bringen, beispielsweise in die Form der Hand des Anwenders, so, wie sie beim Festhalten der Zahnbürste beim Zähneputzen geformt ist. Nach Abkühlen auf Raumtemperatur ist diese individuelle Form für eine bestimmte Zeit bei Raumtemperatur fixiert. Diese Zeit liegt im Allgemeinen unter zwei Monaten, wonach der ursprüngliche Griff wieder zurückgebildet wird. Der Rückformungsprozess lässt sich auch durch wiederholtes Erhitzen, beispielsweise mit warmem Wasser oder einem Fön, beschleunigen. Dadurch besteht die Möglichkeit den verformten Griff in die Ausgangsform oder in eine andere Form zu bringen. Das erfindungsgemäß herstellbare Polycarbonat ist durch Erwärmen auf eine Temperatur oberhalb des Erweichungspunktes reversibel verformbar.

Anwendungen, bei denen eine individuelle Anpassung an den Nutzer gewünscht ist, sind beispielsweise Haushaltsgeräte, Werkzeuge, Hygieneutensilien, chirurgisches/medizinische Werkzeuge, Sportgeräte, die mit der Hand gehalten werden. Weitere Beispiele für solche Anwendungen sind Sportgeräte wie Tennisschläger, Badmintonschläger, Squashschläger usw., Haushaltsgeräte wie Mixer, Messer, Bügeleisen, Stabmixer, Schneebesen, Kneter, Töpfe, Löffel, Schneidebretter, Werkzeuge wie Hammer, Sägen, Stichsägen, im Automobilbereich wie Lenkrad, Schalter, Seitenwände, Sitze, Hygieneutensilien wie Zahnbürste, Klobürste, Haarfön, Kommunikationsgeräte wie Mobiltelefone (Tasten und Griff), Telefone, Schreibgeräte wie Kugelschreiber, Bleistifte, Füllfederhalter, künstlerische Anwendungen, beispielsweise als plastisches Verarbeitungsmaterial, oder in der Medizintechnik, beispielsweise als körperidentische Abdrücke oder Hautersatz.

Die vorliegende Erfindung betrifft auch einen Formkörper, der einen Handgriff aufweist, der oberflächlich, gegebenenfalls teilweise, mit dem erfindungsgemäßen Polycarbonat beschichtet ist, oder aus dem erfindungsgemäßen Polycarbonat besteht. Formkörper, die einen Handgriff aufweisen, sind beispielsweise Sportgeräte wie Tennisschläger, Badmintonschläger, Squashschläger usw., Haushaltsgeräte wie Mixer, Messer, Bügeleisen, Stabmixer, Schneebesen, Kneter, Töpfe, Löffel, Schneidebretter, Werkzeuge wie Hammer, Sägen, Stichsägen, im Automobilbereich wie Lenkrad, Schalter, Seitenwände, Sitze, Hygieneutensilien wie Zahnbürste, Klobürste, Haarfön, Kommunikationsgeräte wie Mobiltelefone, Telefon, oder Schreibgeräte wie Kugelschreiber, Bleistifte, Füllfederhalter.

Die folgenden Beispiele sollen die Erfindung näher illustrieren ohne sie einzuschränken.

### Beispiele

### Beispiel 1:

### Synthese der Polymeren

Polycarbonate können durch Umsetzung von Epoxiden mit Kohlendioxid mittels eines Katalysators gewonnen werden. Ein geeigneter Katalysator ist Zinkglutarat (ZnGlu), das durch Umsetzung von Glutarsäure und Zinkoxid gewonnen werden kann (Polymer Journal 1981, 13, 407 oder US 5,026,676 Methode B in Toluol).

### a) Polymer ausgehend von Propylenoxid/Kohlendioxid

In einem 10 1 Autoklaven werden 40 g ZnGlu in 2200 ml Toluol suspendiert, und durch Aufpressen von Kohlendioxid wird ein Druck von 10 bar erzeugt. Anschließend werden 1,1 kg Propylenoxid auf einmal hinzugefügt und der Druck wird durch Zugabe von Kohlendioxid auf 30 bar erhöht. Anschließend wird die Temperatur auf 80 °C erhöht und der Reaktionsdruck von 55 bar wird eingestellt. Die Polymerisationsreaktion wird für 4 Stunden durchgeführt, anschließend wird der Druck auf Atmosphärendruck abgesenkt. Die Suspension des Produkts in Toluol wird mit wässriger Salzsäure (0,1 bis 2,0 M) und Wasser gewaschen. Nachdem die das Polymer enthaltende Phase abgetrennt worden ist, wird diese mittels einer Zahnradpumpe auf einen Extruder transferiert und bei 190 °C entgast. Die resultierende transparente Polymerschmelze wird zu einer runden Faser von ungefähr 5 mm Durchmesser gezogen und in ein Granulat geschnitten.

Das Polymer (Polymer 1) hat einen Carbonatgehalt von 93 % (benachbart zu Etherverknüpfungen) und eine DSC-Analyse ergibt eine Glasübergangstemperatur Tg von 35 °C. Das gewichtsmittlere Molekulargewicht beträgt 740.000 g/mol (bimodal, gemessen gegen einen PMMA-Standard in HFIP, enthaltend 0,05 % KO₂CCF₃).

Das Granulat wird in eine 3 mm dicke Schicht gepresst, welche augenscheinlich vollkommen transparent ist.

Auf die gleiche Weise, aber unter anderen Drücken wurden die folgenden Polypropylencarbonate (PPC) mit Glasübergangstemperaturen Tg im Bereich von 15 bis 40 °C hergestellt.

**Tabelle 1: Polypropylencarbonate mit verschiedenen Etherverknüpfungsanteilen**

| **Polymer Nr.** | **Druck [bar]** | **M_{w} [g/mol]** | **Polydispersität** | **Etherverknüpfungsanteil [%]** | **Tg [°C]** |
|---|---|---|---|---|---|
| 3 | 45 | 620.000 | 5,8 | 11 | 32 |
| 4 | 40 | 260.000 | 3,4 | 37 | 20 |
| 5 | 44 | 454.000 | 7,8 | 14,5 | 30 |

### b) Polymer ausgehend von Gemischen von Propylenoxid-Ethylenoxid-Kohlendioxid.

Ein 3,51 Autoklav wird mit 25 g ZnGlu und 0,71 Toluol befüllt, und durch Aufpressen von Kohlendioxid wird ein Druck von 10 bar eingestellt. 720 ml einer Mischung aus Propylenoxid und Ethylenoxid (80/20) werden bei Raumtemperatur hinzugefügt. Während der Zugabe wird die Temperatur auf 40 °C erhöht, die Zugabe wird bei einer Rate von 20 ml/min durchgeführt. Der Druck wird auf 30 bar und die Temperatur wird auf 80 °C erhöht. Bei gleich bleibender Temperatur wird der Druck auf 50 bar erhöht und gehalten. Nach sechsstündigem Rühren wird der Druck auf Atmosphärendruck abgesenkt und die Aufschlämmung des Produkts wird mit 500 ml Chloroform verdünnt. Die Produktaufschlämmung wird mit wässriger Salzsäure (500 ml, 0,1 molar) extrahiert, das Produkt wird mit einer Zahnradpumpe auf einen Extruder transferiert und wie oben in ein Granulat überführt. Nach Trocknen erhält man 440 g eines transparenten Polymers. Die Glastemperatur Tg beträgt 30 °C, das gewichtsmittlere Molekulargewicht beträgt 370.000 g/mol, 33% des Polymer-C₂-Rückrats resultiert aus Ethylenoxid (Polymer 2).

In Vergleichsexperimenten werden Terpolymere ausgehend von Propylenoxid/Ethylenoxid/Kohlendioxid hergestellt, welche die folgenden Eigenschaften aufweisen:

**Tabelle 2:**

| **Polymer Nr.** | **EO-Einheiten im Polymer [%]** | **Polycarbonat-Verknüpfungs-Anteil [%]** | **Tg [°C]** |
|---|---|---|---|
| 6 | 35 | 93 | 26 |
| 7 | 18 | 90 | 22 |
| 8 | 33 | 93 | 28 |

### Beispiel 9

### Verwendung des Materials für eine individuelle Anpassung

Eine 0,3 mm dicke Schicht (110 x 300 mm) von Polymer 1, welches durch Flach-Extrusion erhalten worden ist, wird in einem Wasserbad (T = ca. 45 °C) erhitzt. Die Polymerschicht wird biegsam. Die warme Polymerschicht wird auf einen menschlichen Unterarm aufgebracht. Nachdem die Polymerschicht auf Umgebungstemperatur abgekühlt ist, bildet sie einen 1:1 1 Abdruck des Arms, ohne dass Körperhaare an ihr festkleben. Das gleiche Verfahren wird an einem Gesicht durchgeführt. Nase und Augenbrauen werden 1 : 1 abgebildet.

Diese Verwendung ist nützlich bei der Herstellung von Brillen, für Sport-Schutz-Brillen oder für die Herstellung eines Abdrucks zur Behandlung eines gebrochenen Arms oder zur Konstruktion einer Büste, beispielsweise im Falle einer künstlerischen Anwendung.

### Beispiele 10 und 11

Ein Bleistift wird mit Polycarbonat 8 beschichtet, indem er unter Stickstoff bei einer Temperatur von 170 °C in eine Schmelze eingeführt wird. Um eine individuelle Griffform zu erhalten, wird der Bleistift anschließend mit einem Haushaltshaarfön aufgeheizt und durch Greifen des heißen Bleistifts mit der Hand in einer typischen Schreibposition geformt. Dabei muss moderater Druck ausgeübt werden, bis die Polymerbeschichtung Körpertemperatur aufweist. Es resultiert eine individuelle Griffform.

Nach dem gleichen Verfahren wird eine Zahnbürste aus Polypropylen mit Polycarbonat 2 beschichtet. Eine individuelle Griffform wird erzielt durch Aufheizen des Objekts mit einem Haushaltsfön und anschließendem Formen mit der Hand. Daraus resultiert ein angenehmer, persönlicher Griff.

## Patentansprüche

1. Verfahren zur Herstellung von Polycarbonaten mit einem gewichtsmittleren Molekulargewicht Mw von ≥ 230.000 g/mol und einem Gehalt an cyclischen Verbindungen von ≤ 2 Gew.-%, beinhaltend die Schritte
(a) Umsetzung von wenigstens einem Oxiran mit Kohlendioxid in Gegenwart einer Metall-Polycarbonsäure-Verbindung in einem aprotischen, nicht mit Wasser mischbaren Lösungsmittel bei einer Temperatur von 40 bis 120 °C und einem Druck von 1 bis 100 bar, wobei das molare Verhältnis von Monomer zu Metall-Polycarbonsäure-Verbindung ≥ 75 beträgt,
(b) Zugabe einer wässrigen Lösung einer anorganischen Säure zu dem Reaktionsgemisch nach Beendigung der Umsetzung,
(c) Abtrennung der wässrigen Phase,
(d) gegebenenfalls Waschen der verbleibenden organischen Phase mit Wasser und
(e) Entgasen und Trocknen der resultierenden Aufschlämmung des Polycarbonats in dem aprotischen, nicht mit Wasser mischbaren Lösungsmittel.

2. Verfahren nach Anspruch 1, **dadurch gekennzeichnet, dass** das wenigstens eine Oxiran ausgewählt ist aus der Gruppe bestehend aus Ethylenoxid, Propylenoxid, n-Butylenoxid, Isobutylenoxid, Pentylenoxid, Hexylenoxid, Epichlorhydrin, Styroloxid, Cyclohexenoxid und Gemischen davon.

3. Verfahren nach Anspruch 1 oder 2, **dadurch gekennzeichnet, dass** die Metall-Polycarbonsäure-Verbindung eine Metall-Dicarbonsäure-Verbindung ist.

4. Verfahren nach Anspruch 3, **dadurch gekennzeichnet, dass** die Metall-Dicarboxylat-Verbindung Zink-glutarat, Zink-adipinat oder eine Zinkdicarboxylat-Mischung hergestellt aus Adipin- und Glutarsäure ist.

5. Verfahren nach einem der Ansprüche 1 bis 4, **dadurch gekennzeichnet, dass** das aprotische, nicht mit Wasser mischbare Lösungsmittel mit Wasser ein Azeotrop bildet.

6. Verfahren nach einem er Ansprüche 1 bis 5, **dadurch gekennzeichnet, dass** die anorganische Säure ausgewählt ist aus der Gruppe bestehend aus Salzsäure, Schwefelsäure, Phosphorsäure, Methansulfonsäure und Gemischen davon.

7. Verwendung eines Polycarbonats erhältlich durch ein Verfahren gemäß einem der Ansprüche 1 bis 6 in künstlerischen Anwendungen, in der Medizintechnik, bei der Herstellung von Sportgeräten, von Haushaltsgeräten, von Werkzeugen, im Automobilbereich, bei der Herstellung von Hygieneutensilien, von Kommunikationsgeräten oder von Schreibgeräten.

8. Verwendung nach Anspruch 7, **dadurch gekennzeichnet, dass** das Polycarbonat zur Beschichtung von Handgriffen verwendet wird.

9. Formkörper, **dadurch gekennzeichnet, dass** er einen Handgriff aufweist, der oberflächlich mit einem Polycarbonat erhältlich durch ein Verfahren gemäß einem der Ansprüche 1 bis 6 beschichtet ist oder aus einem Polycarbnat erhältlich durch ein Verfahren gemäß einem der Ansprüche 1 bis 6 besteht.

10. Verwendung nach Anspruch 7 oder 8, **dadurch gekennzeichnet, dass** als Oxiran-Bausteine Ethylenoxid- und Propylenoxid-Bausteine vorliegen.

## Claims

1. A process for preparation of polycarbonates with weight-average molar mass M_{w} ≥ 230 000 g/mol and with ≤ 2% by weight content of cyclic compounds, including the following steps:
(a) reaction of at least one oxirane with carbon dioxide in the presence of a metal-polycarboxylic acid compound in an aprotic, non-water-miscible solvent at a temperature of from 40 to 120°C and at a pressure of from 1 to 100 bar, where the molar ratio of monomer to metal-polycarboxylic acid compound is ≥ 75,
(b) addition of an aqueous solution of an inorganic acid to the reaction mixture once the reaction has ended,
(c) removal of the aqueous phase,
(d) if appropriate, washing of the remaining organic phase with water, and
(e) devolatilization and drying of the resultant slurry of the polycarbonate in the aprotic, non-water-miscible solvent.

2. The process according to claim 1, wherein at least one oxirane has been selected from the group consisting of ethylene oxide, propylene oxide, n-butylene oxide, isobutylene oxide, pentylene oxide, hexylene oxide, epichlorohydrin, styrene oxide, cyclohexene oxide, and mixtures thereof.

3. The process according to claim 1 or 2, wherein the metal-polycarboxylic acid compound is a metal-dicarboxylic acid compound.

4. The process according to claim 3, wherein the metal-dicarboxylate compound is zinc glutarate, zinc adipate, or a zinc dicarboxylate mixture prepared from adipic and glutaric acid.

5. The process according to any of claims 1 to 4, wherein the aprotic, non-water-miscible solvent forms an azeotrope with water.

6. The process according to any of claims 1 to 5, wherein the inorganic acid has been selected from the group consisting of hydrochloric acid, sulfuric acid, phosphoric acid, methanesulfonic acid, and mixtures thereof.

7. The use of a polycarbonate obtainable by a process according to any of claims 1 to 6 in artists' applications, in medical technology, in production of sports equipment, of household equipment, of tools, in the automobile sector, in production of hygiene utensils, of communication equipment, or of writing equipment.

8. The use according to claim 7, wherein the polycarbonate is used for coating of handles.

9. A molding, which has a handle which has been surface-coated with a polycarbonate obtainable by a process according to any of claims 1 to 6, or is composed of a polycarbonate obtainable by a process according to any of claims 1 to 6.

10. The use according to claim 7 or 8, wherein the oxirane units present comprise ethylene oxide units and propylene oxide units.

## Revendications

1. Procédé de fabrication de polycarbonates ayant un poids moléculaire moyen en poids M_{w} ≥ 230 000 g/mol et une teneur en composés cycliques ≤ 2 % en poids, comprenant les étapes :
(a) réaction d'au moins un oxirane avec du dioxyde de carbone en présence d'un composé métal-acide polycarboxylique dans un solvant aprotique non miscible avec l'eau à une température de 40 à 120 °C et une pression de 1 à 100 bars, le rapport molaire entre le monomère et le composé métal-acide polycarboxylique étant ≥ 75,
(b) ajout d'une solution aqueuse d'un acide inorganique au mélange réactionnel après la fin de la réaction,
(c) séparation de la phase aqueuse,
(d) éventuellement lavage de la phase organique restante avec de l'eau et
(e) dégazage et séchage de la suspension résultante du polycarbonate dans le solvant aprotique non miscible avec l'eau.

2. Procédé selon la revendication 1, **caractérisé en ce que** le ou les oxiranes sont choisis dans le groupe constitué de l'oxyde d'éthylène, l'oxyde de propylène, l'oxyde de n-butylène, l'oxyde d'isobutylène, l'oxyde de pentylène, l'oxyde d'hexylène, l'épichlorhydrine, l'oxyde de styrène, l'oxyde de cyclohexène et leurs mélanges.

3. Procédé selon la revendication 1 ou 2, **caractérisé en ce que** le composé métal-acide polycarboxylique est un composé métal-acide dicarboxylique.

4. Procédé selon la revendication 3, **caractérisé en ce que** le composé de dicarboxylate métallique est le glutarate de zinc, l'adipinate de zinc ou un mélange de dicarboxylate de zinc fabriqué à partir d'acide adipique et glutarique.

5. Procédé selon l'une quelconque des revendications 1 à 4, **caractérisé en ce que** le solvant aprotique non miscible avec l'eau forme un azéotrope avec l'eau.

6. Procédé selon l'une quelconque des revendications 1 à 5, **caractérisé en ce que** l'acide inorganique est choisi dans le groupe constitué de l'acide chlorhydrique, l'acide sulfurique, l'acide phosphorique, l'acide méthanesulfonique et leurs mélanges.

7. Utilisation d'un polycarbonate pouvant être obtenu par un procédé selon l'une quelconque des revendications 1 à 6 dans des applications artistiques, dans la technologie médicale, lors de la fabrication d'appareils sportifs, d'appareils ménagers, d'outils, dans le domaine automobile, lors de la fabrication d'ustensiles d'hygiène, d'appareils de communication ou d'instruments d'écriture.

8. Utilisation selon la revendication 7, **caractérisée en ce que** le polycarbonate est utilisé pour le revêtement de poignées.

9. Corps moulé, **caractérisé en ce qu'**il comporte une poignée qui est revêtue en surface avec un polycarbonate pouvant être obtenu par un procédé selon l'une quelconque des revendications 1 à 6 ou qui est constituée d'un polycarbonate pouvant être obtenu par un procédé selon l'une quelconque des revendications 1 à 6.

10. Utilisation selon la revendication 7 ou 8, **caractérisée en ce que** des constituants oxyde d'éthylène et oxyde de propylène sont présents en tant que constituants oxirane.
